# NEUE EUROPÄISCHE PATENTSCHRIFT

(11) **EP 0 400 170 B2**
(45) Veröffentlichungstag und Bekanntmachung des Hinweises auf die Entscheidung über den Einspruch: **18.03.1998**
(45) Hinweis auf die Patenterteilung: 14.04.1993
(21) Anmeldenummer: 89109760.2
(22) Anmeldetag: 30.05.1989
(51) Int. Cl.: F02M 37/22, B29C 45/14, B01D 35/02, B01D 29/19

(54) **Verfahren zum Herstellen eines Filters für flüssige Kraftstoffe**
Method of manufacturing a filter for liquid fuels
Procédé de fabrication d'un filtre pour combustibles liquides

(43) Veröffentlichungstag der Anmeldung: 05.12.1990
(73) Patentinhaber: Filtertek, S.A., F-60128 Plailly (FR)
(72) Erfinder: Kools, Wilhelm, D-4052 Korschenbroich 3 (DE)
(74) Vertreter: Brose, D. Karl, Dipl.-Ing.

(56) Entgegenhaltungen:
- DE-A- 3 133 343
- DE-A- 3 609 905
- DE-A- 3 609 906
- DE-C- 3 804 344
- DE-U- 8 124 632
- US-A- 4 312 753

## Beschreibung

Die Erfindung betrifft ein Verfahren zum Herstellen eines Filters für flüssige Kraftstoffe, das aus einem elastischen, aus Kunststoff hergestellten gitterförmigen Stützkörper, ein diesen umgebendes elastisches Kunststoffiltergewebe und aus einem an dem Stützkörper angespritzten Pumpenanschlußstutzen besteht, wobei das Filter durch eine enge Kreisöffnung in den Innenraum eines Kraftstofftanks durch elastisches Verbiegen einführbar ist.

Zunächst wird der Pumpenanschlußstutzen mit der sich ebenfalls im Innenraum des Kraftstofftanks befindlichen oder in den Innenraum ragenden Kraftstoffpumpe verbunden. Danach werden derartige Filter etwa U-förmig umgebogen durch die Kraftstofftank-Einfüll-Öffnung eingeführt und springen im Innern des Kraftstofftanks wieder in ihre usprüngliche Gestalt zurück. Bei Betätigung der Kraftstoffpumpe durchströmt der flüssige Kraftstoff das Filter von außen nach innen, wobei unerwünschte Partikel außen zurückgehalten werden und wird durch den Pumpenanschlußstutzen in einer Kraftstoffleitung seinem Verwendungszweck zugeführt.

Das Filter ist daher entsprechend elastisch und auch der Stützkörper weist eine gewisse Elastizität auf. Nur der Pumpenanschlußstutzen und eine an dem Stützkörper befindliche Nabe sind durch ihre Formgebung und durch ihre Wanddicken entsprechend starr. Der gitterförmige Stützkörper mit Nabe und der Pumpenanschlußstutzen bestehen aus plastifizierbaren Kunststoffen und das Filtergewebe besteht aus eigens hergestellten Gewebematten mit Netzwerkslücken, deren Größe und Form vorgeschrieben sind.

Ein derartiges Filter ist aus dem deutschen Gebrauchsmuster G 86 08 100.4 bzw. der deutschen Patentanmeldung 36 09 906 bekannt. Die Herstellung eines solchen Filters wird jedoch dort nur sehr unzureichend beschrieben. So ist es bekannt, den gitterförmigen elastischen Stützkörper, an dem der Pumpenanschlußstutzen angeordnet ist, innerhalb des geschlossenen flachen Schlauchs aus dem Filtergewebe allseitig freiliegend anzuordnen und mit dem Filtergewebe lediglich im Bereich des Pumpenanschlußstutzens nachträglich zu verbinden. Hierbei wird der Gewebeschlauch (das Kunststoffiltergewebe) durch Schweißen der beiden Quer- und einer Längskante eines Gewebezuschnitts hergestellt. Der zeitliche Ablauf sowie weitere Einzelheiten des Herstellverfahrens und vor allen Dingen die Befestigungsart können jedoch hieraus nicht entnommen werden.

Ein ähnlicher Filter ist aus der US-A-432 753 bekannt.

Der vorliegenden Erfindung liegt deshalb die Aufgabe zugrunde, ein zu dem bekannten Filter führendes verbessertes Herstellverfahren vorzuschlagen.

Die gestellte Aufgabe wird erfindungsgemäß durch die Merkmale des Anspruchs 1 gelöst. Ein solches Herstellverfahren verbürgt die wirtschaftlichste Herstellung bei Einhaltung aller technisch notwendigen Funktionen bzw. Vorgaben und somit den geringstmöglichen Herstellpreis bei hoher Qualität.

In Weiterbildung der Erfindung ist vorgesehen, daß das Kunststoffiltergewebe in dem Kunststoffspritzgießwerkzeug an Rippen des Stützkörpers durch Anspritzen befestigt wird. Dadurch kann entgegen allen früheren Erwartungen eine dauerhafte Verbindung zwischen Stützkörper und Kunststoffiltergewebe auch bei Auftreten von Wärmedehnungskräften geschaffen werden.

Eine weitere Verbesserung des erfindungsgemäßen Verfahrens besteht darin, daß das Kunststoffiltergewebe um eine vorgesehene Faltkante doppellagig zusammengelegt wird. Dies ist möglich, weil die Lage des Kunststoffiltergewebes zum Pumpenanschlußstutzen bereits sicher festgelegt ist.

Eine andere Weiterentwicklung des Verfahrens besteht darin, daß das Kunststoffiltergewebe nach dem Falten geschweißt und dann erst durch Stanzen seine äußere Fertig-Kontur gebildet wird. Diese Maßnahme läßt besondere Vorkehrungen für eine genaue Doppellage entfallen.

Weiterhin ist vorgesehen, daß das nach dem Schuß-Ketten-Prinzip hergestellte Kunststoffiltergewebe bei einer polygonalen Fertig-Kontur der Schweißkante mit seiner Schuß-Richtung parallel zu einer Haupt-Längsseite des Polygons verläuft. Diese Maßnahme sichert eine besonders gute Verschmelzung des Kunststoffiltergewebes am Pumpenanschlußstutzen.

Schließlich ist es vorteilhaft, wenn auf dem Pumpenanschlußstutzen eine Metallhülse mit sattem Sitz aufgeschoben wird.

In der Zeichnung sind die einzelnen Herstellschritte wie folgt dargestellt:

Es zeigen:
- Fig. 1: das Ausstanzen des Kunststoffiltergewebes.
- Fig. 2: das Verbinden des Kunststoffiltergewebes mit dem Pumpenanschlußstutzen im Kunststoffspritzgießwerkzeug.
- Fig. 3: das Anfertigen und Verschließen des den Stützkörper umgebenden Kunststoffiltergewebes.
- Fig. 4: das Fertigmontieren weiterer Einzelteile am Fertigfilter und
- Fig. 5: das Fertigfilter im Längsschnitt.

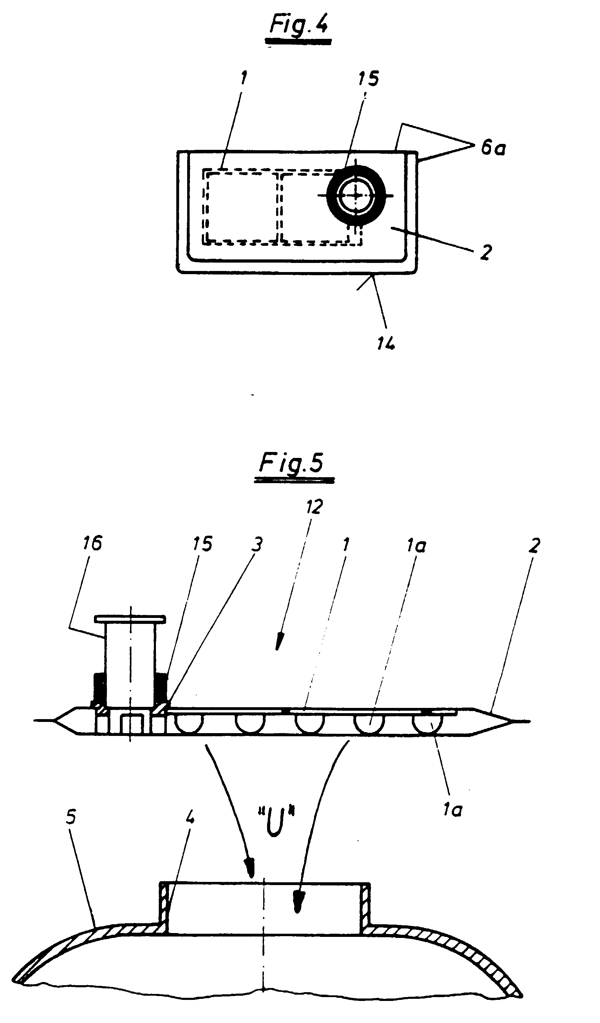

Das Filter, das dem Herstellverfahren zugrundeliegt, besteht aus einem gitterförmigen, elastischen, aus plastifizierbarem Kunststoff hergestellten Stützkörper 1, ein den Stützkörper 1 umgebendes elastisches Kunststoffiltergewebe 2 und aus einem an dem Stützkörper 1 angespritzten Pumpenanschlußstutzen 3. Das Filter ist durch eine abmessungstechnisch sehr enge Kreisöffnung 4 in den Innenraum eines Kraftstofftankes 5 einführbar, indem es mit seiner Längserstreckung zu einem "U" gebogen wird (Fig.5).

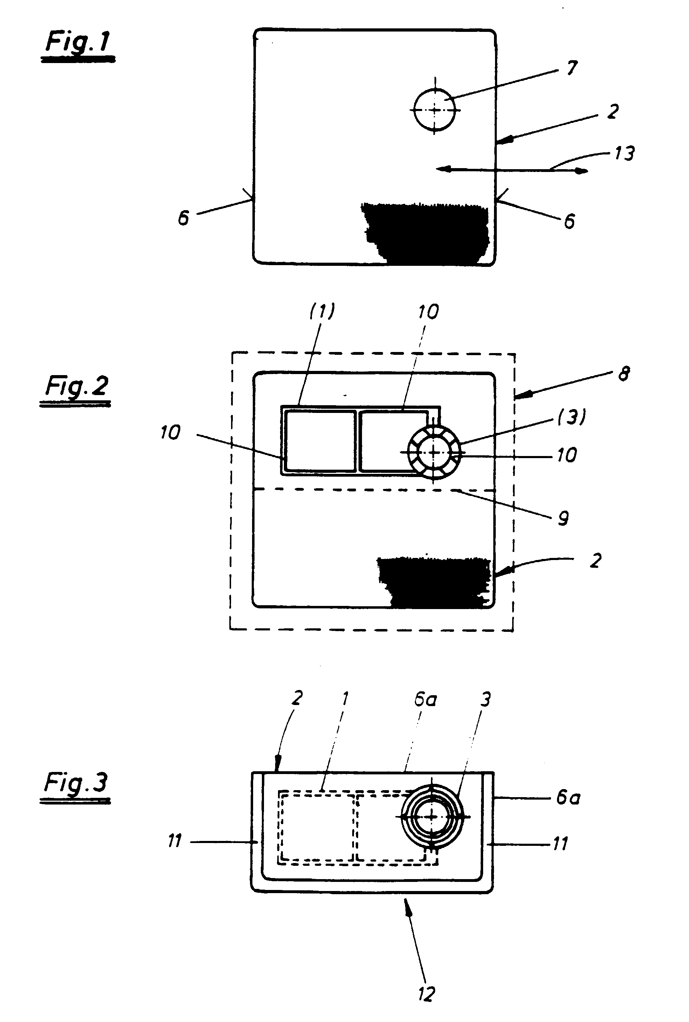

Zunächst wird in einem ersten Verfahrensschritt (Fig.1) das Kunststoffiltergewebe 2 in seiner einlagigen äußeren Kontur 6 und mit einer inneren Ausnehmung 7 für den Pumpenanschlußstutzen 3 ausgestanzt. Die innere Ausnehmung 7 zentriert später das einlagige Kunststoffiltergewebe 2. In einem zweiten Verfahrensschritt wird danach das Kunststoffiltergewebe 2 in ein Kunststoffspritzgießwerkzeug 8 eingelegt (Fig.2), wobei die einlagige Kontur 6 bereits derart positioniert wird, daß eine spätere Faltkante 9 eine passende Lage zu dem Gießraum 10 einnimmt. Der Gießraum 10 wird beim Spritzen des plastischen Kunststoffs derart ausgefüllt, daß der Stützkörper 1 zusammen mit dem Pumpenanschlußstutzen 3 gebildet wird und gleichzeitig das Kunststoffiltergewebe 2 miteingeschmolzen wird. In einem zusätzlichen Verfahrensschritt wird nach dem Ausheben aus dem Kunststoffspritzgießwerkzeug 8 das Kunststoffiltergewebe 2 über die Faltkante 9 bzw. um den Stützkörper 1 herum und durch Schweißen an einer Schweißkante 11 das geschlossene Fertigfilter 12 fertiggestellt.

Während des Spritzens (Fig.2) ist es möglich, daß das Kunststoffiltergewebe 2 in dem Kunststoffspritzgießwerkzeug 8 an Rippen la (Fig.5) des Stützkörpers 1 durch Anspritzen (bzw. Anschmelzen) befestigt wird.

Gemäß Fig. 3 ist das Kunststoffiltergewebe 2 um die Faltkante 9 doppellagig zusammengelegt und an den verbleibenden drei Schweißkanten 11 geschweißt. Hier wird die Fertig-Kontur 6a in einem weiteren Arbeitsgang durch Stanzen hergestellt.

Das nach dem Schuß-Ketten-Prinzip hergestellte Kunststoffiltergewebe 2 wird nach einer besonderen Regel in das Kunststoffspritzgießwerkzeug 8 eingelegt: Bei einer polygonalen, z.B. rechteckigen Fertig-Kontur 6a der Schweißkante 11 verläuft die Schußrichtung 13 parallel zu einer Haupt-Längsseite 14 des Polygons (Fig.1 und 4).

Auf den Pumpenanschlußstutzen 3 wird in einem weiteren Verfahrensschritt eine Metallhülse 15 mit sattem Sitz als letzter Arbeitsgang aufgeschoben.

Für den Transport des Filters gewährleistet eine Verschlußbuchse 16 die Reinhaltung des Fertigfilters 12 bis zum Einbau auf die (nicht gezeigte) Kraftstoffpumpe, die nach Montage mit dem Fertigfilter 12 durch die Kreisöffnung 4 in den Kraftstofftank 5 eingebaut wird.

## Patentansprüche

1. Verfahren zum Herstellen eines Filters für flüssige Kraftstoffe, welches aus einem elastischen, aus Kunststoff hergestellten gitterförmigen Stützkörper (1), einem diesen umgebenden elastischen Kunststoffiltergewebe (2) und einem an den Stützkörper (1) angespritzten Pumpenanschlußstutzen besteht, wobei das Filter durch die enge Kreisöffnung (4) in den Innenraum eines Kraftstofftanks (5) durch flexibles bzw. elastisches Verbiegen einführbar ist, bei welchem zunächst aus einem Flächenstück Kunststoffiltergewebe (2) einlagig mit einer äußeren Kontur (6) und mit einer inneren Ausnehmung (7) auf den Pumpenanschlußstutzen (3) passend ausgestanzt wird, danach das Kunststoffiltergewebe (2) in den Gießraum (10) eines Kunststoffspritzgießwerkzeugs (8) ausgerichtet eingelegt wird, dann durch Spritzen von plastifizierbarem Kunststoff in einem einzigen Kunststoffspritzgießwerkzeug (8) der Stützkörper (1) mit dem Pumpenanschlußstutzen (3) gebildet, und gleichzeitig der Pumpenanschlußstutzen (3) mit dem Kunststoffiltergewebe (2) verbunden wird und danach außerhalb des Kunststoffspritzgußwerkzeugs (8) das Kunststoffiltergewebe (2) durch Umfalten um den Stützkörper (1) und durch Schweißen an einer Schweißkante (11) verschlossen wird.

2. Verfahren nach Anspruch 1,
dadurch gekennzeichnet.
daß das Kunststoffiltergewebe (2) in dem Kunststoffspritzgießwerkzeug (8) an Rippen (1a) des Stützkörpers (1) durch Anspritzen befestigt wird.

3. Verfahren nach Anspruch 1 oder 2
dadurch gekennzeichnet,
daß das Kunststoffiltergewebe (2) um eine vorgesehene Faltkante (9) doppellagig zusammengelegt wird.

4. Verfahren nach den Ansprüchen 1 bis 3,
dadurch gekennzeichnet,
daß das Kunststoffiltergewebe (2) nach dem Falten geschweißt und dann erst durch Stanzen seine äußere Fertig-Kontur (6a) gebildet wird.

5. Verfahren nach einem oder mehreren der Ansprüche 1 bis 4,
dadurch gekennzeichnet.
daß das nach dem Schuß-Ketten-Prinzip hergestellte Kunststoffiltergewebe (2) bei einer polygonalen Fertig-Kontur (6a) der Schweißkante (11) mit seiner Schuß-Richtung (13) parallel zu einer Haupt-Längsseite (14) des Polygons verläuft.

6. Verfahren nach einem oder mehreren der Ansprüche 1 bis 5,
dadurch gekennzeichnet,
daß auf den Pumpenanschlußstutzen (3) eine Metallhülse (15) mit sattem Sitz aufgeschoben wird.

## Claims

1. A method for producing a filter for liquid fuels, which is consisting of a latticed, elastic bracing member (1) produced from synthetic plastics material, a synthetic plastics filter mesh (2) enclosing it and a pump connecting socket (3), which is moulded onto the bracing member (1), wherein the filter is capable of being inserted through a narrow circular aperture (4) into the interior of a fuel tank (5) by being flexibly or resiliently bent, wherein firstly a synthetic plastics filter mesh (2) is stamped out in one layer from a flat piece to have an outer contour (6) and an inner cut out (7) to fit the pump connecting socket (3), whereafter subsequently the synthetic plastics filter mesh (2) is inserted into the mould cavity (10) of a synthetic plastics moulding tool (8) in its correct alignment, whereafter subsequently the bracing member (1) is formed with the pump connecting socket (3) by an injection moulding of plasticizable synthetic plastics material in a single synthetic plastics moulding tool (8) simultaneously connecting the synthetic plastics filter mesh (2) to the pump connecting socket (3) and, wherein subsequently outside the synthetic plastics injection moulding tool (8) the synthetic plastics filter mesh is closed by being folded around the bracing member (1) and welded along a welding edge (11).

2. A method according to claim 1, characterized in that the synthetic plastics filter mesh (2) is fixed in the synthetic plastics injection moulding tool (8) by being moulded onto ribs (1a) on the bracing member (1).

3. A method according to claim 1 or 2, characterized in that the synthetic plastics filter mesh (2) is folded in a double layer about a folding edge (9) which is provided.

4. A method according to claims 1 to 3, characterized in that the synthetic plastics filter mesh (2) is welded after being folded and only then is its final outer contour (6a) formed by stamping.

5. A method according to one or more of the claims 1 to 4, characterized in that the welding edge (11) has a polygonal final contour (6a), the synthetic plastics filter mesh (2), which is produced on the warp-weft principle, has its weft direction (13) extending parallel with a main longitudinal side (14) of the polygon.

6. A method according to one or more of claims 1 to 5, characterized in that a metal sleeve (15) is pushed onto and is a snug fit on the pump connecting socket (3).

## Revendications

1. Procédé pour la fabrication d'un filtre pour des carburants liquides, comprenant un support (1) réalisé en matière synthétique, un tissu 5 de filtre en matière synthétique (2) élastique entourant ce support et un ajutage de raccordement de pompe (3) injecté sur le support (1),
le filtre pouvant être introduit à travers une étroite ouverture circulaire (4) dans l'intérieur d'un réservoir de carburant (5) par un pliage flexible ou élastique, selon lequel
- d'abord à partir d'un morceau plat, on estampe un tissu de filtre en matière synthétique (2) à une couche avec un contour extérieur (6) et un évidement intérieur (7) adapté à l'ajutage de raccordement de pompe (3),
- ensuite on aligne le tissu de filtre de matière synthétique (2) dans la cavité d'injection (10) d'un outil d'injection de matière synthétique (8),
- puis on forme le support (1) avec l'ajutage de raccordement de pompe (3) par injection de matière synthétique pouvant être plastifié dans un seul moule d'injection,
- et en même temps on relie le tissu de filtre en matière synthétique (2) à l'ajutage de raccordement de pompe (3)
- en dehors du moule d'injection (8) on ferme le tissu de filtre de matière synthétique (2) par pliage autour du support (1) et par soudage sur un bord de soudage (11).

2. Procédé selon la revendication 1,
caractérisé en ce que
le tissu de filtre en matière synthétique (2) est fixé dans l'outil d'injection de matière synthétique (8) à des nervures (la) du corps d'appui (1) par injection.

3. Procédé selon une ou plusieurs des revendications 1 à 2,
caractérisé en ce que
on rassemble le tissu de filtre en matière synthétique (2) autour d'un bord de pliage (9) prévu en double couche.

4. Procédé selon les revendications 1 à 3,
caractérisé en ce que
on soude le tissu de filtre en matière synthétique (2) après le pliage et ensuite seulement on forme son contour final extérieur (6a) par estampage.

5. Procédé selon une ou plusieurs des revendications 1 à 4,
caractérisé en ce que
on aligne le tissu de filtre en matière synthétique (2) fabriqué selon le principe des chaînes et trames, dans le cas d'un contour terminé (6a) polygonal du bord de soudage (11) de façon que le sens de sa trame (13) soit parallèle à un côté longitudinal principal (14) du polygone.

6. Procédé selon une ou plusieurs des revendications 1 à 5,
caractérisé en ce qu'
on enfile une douille métallique (15) avec son siège à plat sur l'ajutage de raccordement de pompe (3).
